Europäisches Patentamt

European Patent Office

Office européen des brevets

(19)

(11) Numéro de publication : **0 041 740**
**B1**

(12) # FASCICULE DE BREVET EUROPÉEN

(45) Date de publication du fascicule du brevet :
07.12.83

(51) Int. Cl.³ : **F 16 H   3/66**

(21) Numéro de dépôt : **81104500.4**

(22) Date de dépôt : **11.06.81**

(54) **Boîte de vitesses automatique à quatre vitesses et une marche arrière obtenues à l'aide de quatre organes de commande.**

(30) Priorité : **11.06.80 FR 8013005**

(43) Date de publication de la demande :
**16.12.81 Bulletin 81/50**

(45) Mention de la délivrance du brevet :
**07.12.83 Bulletin 83/49**

(84) Etats contractants désignés :
**DE GB IT NL SE**

(56) Documents cités :
FR-A-  968 408
FR-A- 1 279 024
FR-A- 1 506 673
FR-A- 1 579 317
FR-A- 2 286 985
GB-A- 1 331 048
US-A- 2 813 437

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Mercier, Jacques**
**5, rue Alasseur**
**F-75015 Paris (FR)**
Inventeur : **Rameau, Jean**
**3, rue de Pointe Robert**
**F-95110 Sannois (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# 0 041 740

Boîte de vitesses automatique à quatre vitesses et une marche arrière obtenues à l'aide de quatre organes de commande

La présente invention concerne les changements de vitesses épicycloïdaux.

Suivant un type connu de changement de vitesses épicycloïdal, les arbres menant et menés sont disposés concentriquement et ils comportent plusieurs trains, simples ou complexes. Les différents rapports sont obtenus en liant en rotation l'un ou l'autre des éléments par des embrayages avec l'arbre menant, et en immobilisant à l'aide de freins un ou plusieurs autres éléments.

Les embrayages et les freins les plus couramment utilisés comportent des disques annulaires réalisés pour obtenir les caractéristiques de frottement convenables, l'ensemble des disques étant serré par un dispositif hydraulique.

A chaque rapport de vitesses obtenu correspond en général le serrage de deux éléments au moins, les autres éléments étant libres.

Le rendement de l'ensemble des trains épicycloïdaux d'un changement de vitesses est affecté par les frottements parasites, appelés « traînée », des éléments non serrés. Un des moyens d'améliorer le rendement est donc de limiter le nombre des éléments (embrayages et/ou freins) non serrés. La plupart des changements de vitesses comportent au moins deux embrayages d'entrée et au moins deux freins, mais le nombre desdits embrayages et freins dépend du nombre des rapports de vitesses en marche avant.

Le plus souvent les changements de vitesses à trois rapports en marche avant comportent deux embrayages et deux freins alors que les changements de vitesses à quatre rapports en marche avant comportent deux embrayages et trois freins, et quelquefois trois embrayages et deux freins, soit cinq organes de commande.

On connaît bien une autre solution, exposée dans le brevet FR-A-1 506 673, qui permet avec seulement deux embrayages et deux freins d'obtenir plus de trois rapports de marche avant. Cependant pour certains de ces rapports c'est toute la puissance motrice qui transite de l'arbre d'entrée à l'arbre de sortie en passant par deux trains d'engrenages successifs ce qui réduit par conséquent fortement le rendement mécanique.

Le but de l'invention est de modifier une boîte du type classique précédent de manière à obtenir un rapport de plus sans ajouter d'organe de commande supplémentaire. En particulier, avec l'exemple précédent qui est le plus courant, il s'agit d'obtenir, à partir d'une boîte à trois rapports en marche avant et un en marche arrière obtenus avec deux embrayages et deux freins, une boîte à quatre rapports en marche avant et un en marche arrière obtenus avec ces mêmes embrayages et freins, et en procédant par dérivation de puissance pour échapper aux inconvénients du dispositif selon le brevet sus-mentionné.

L'invention consiste à réaliser un changement de vitesses à trains épicycloïdaux associé à un convertisseur de couple dans lequel un mécanisme formé de trains épicycloïdaux et d'organes de liaison commandés, du type frein ou embrayage, introduit selon diverses combinaisons des actionnements de ces organes un rapport de vitesse variable entre un arbre d'entrée provenant du convertisseur et un organe de sortie, caractérisé par le fait qu'il comporte en outre un train rassembleur à deux entrées et une sortie dont une des entrées est reliée audit organe de sortie dudit mécanisme, dont l'autre entrée est reliée directement et constamment audit arbre d'entrée et dont la sortie est reliée à l'arbre de sortie de l'ensemble ; et que la commande du mécanisme comporte une combinaison supplémentaire, normalement non utilisable, provoquant le blocage en rotation de l'organe de sortie, blocage auquel correspond un rapport de vitesse supplémentaire pour l'arbre de sortie sans organe de liaison commandé supplémentaire.

Selon une application particulière d'un mécanisme de changement de vitesses selon l'invention, le résultat annoncé est obtenu par l'association d'un mécanisme à deux trains épicycloïdaux simples de caractéristiques particulières, donnant normalement entre l'arbre d'entrée et un organe de sortie trois rapports en marche avant et un en marche arrière et donnant en outre le blocage de l'organe de sortie par une combinaison normalement non utilisée des actionnements des organes de commande, avec un train rassembleur qui additionne les couples fournis respectivement par l'organe de sortie et par l'arbre d'entrée pour entraîner un arbre de sortie, ce qui permet d'obtenir une nouvelle gamme de quatre rapports en marche avant et un en marche arrière, sans ajouter un cinquième organe de commande (embrayage ou frein), le rapport supplémentaire (première) étant obtenu par ladite combinaison provoquant le blocage de l'organe de sortie.

Il résulte de cette disposition que sur tous les rapports la « traînée » due aux organes de commande « libres » est réduite d'un tiers par rapport à un mécanisme classique à quatre rapports en marche avant.

D'autres caractéristiques et avantages de l'invention apparaîtront dans la description qui va suivre d'un mode de réalisation pris comme exemple et représenté sur le dessin annexé sur lequel :

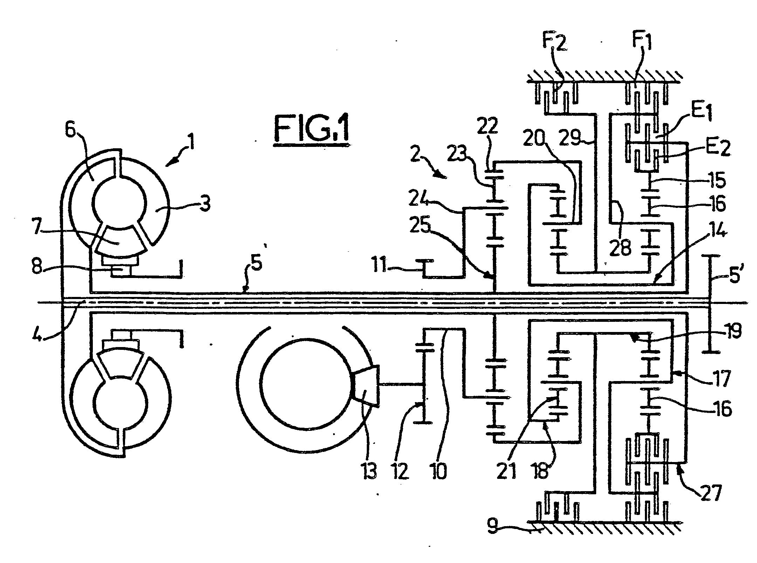

la figure 1 représente une vue schématique en coupe longitudinale d'un mécanisme à quatre rapports en marche avant et une marche arrière.

Dans le mode de réalisation décrit ci-dessous, et donné à titre d'exemple non limitatif, le mécanisme de transmission comprend un convertisseur hydrocinétique de couple 1 et une boîte de vitesses à trains épicycloïdaux 2. Le convertisseur de couple comprend de manière classique trois éléments : l'impulseur ou pompe 3, relié au moteur d'entraînement du véhicule non représenté sur les figures et entraînant la

2

pompe de servitude 5' de la boîte de vitesses par l'intermédiaire d'un arbre 4 qui traverse la boîte de vitesses 2, une turbine 6 dont l'arbre 5 constitue l'arbre d'entrée de la boîte et un réacteur 7 monté par l'intermédiaire d'un dispositif à roue libre 8.

Selon une caractéristique de l'invention, le couple de la turbine transmis par l'arbre 5 se divise en deux parties, la première étant transmise à l'élément 27 d'entrée commun aux deux embrayages et la seconde au planétaire 25 du troisième train épicycloïdal.

Les trois trains épicycloïdaux du mécanisme 2 sont logés dans le carter de mécanisme 9.

Un premier train double reçoit une partie du couple par l'élément d'entrée 27 et le transmet avec un rapport variable à un organe de sortie 20 lié à la couronne 22 du troisième train, lequel train recevant par le planétaire 25 l'autre partie du couple joue le rôle de train « rassembleur ».

Le couple total résultant appliqué au châssis porte-satellites 24 portant les satellites 23 se transmet par l'arbre de sortie 10 et les deux pignons de descente 11 et 12 au couple conique 13 qui transmet le couple aux roues du véhicule par l'intermédiaire d'un différentiel classique.

Les différents rapports de transmission sont obtenus en actionnant selon un processus prédéterminé deux des organes de commande et en en libérant simultanément deux autres.

Ces organes de commande comprennent : un premier embrayage E1, un second embrayage E2, un premier frein F1 et un second frein F2.

Les deux embrayages et les deux freins peuvent être commandés hydrauliquement de manière classique en utilisant des embrayages et freins multidisques soumis à l'action d'un piston recevant la pression d'un fluide hydraulique.

Le premier embrayage E1 est utilisé pour les rapports de marche avant en troisième et quatrième. L'élément 27 transmet par cet embrayage une partie du couple de turbine à un élément intermédiaire 28, et de là au châssis porte-satellites 17 du premier train planétaire ainsi que, par l'intermédiaire de l'arbre tubulaire 14, à la couronne 18 du deuxième train planétaire.

Le deuxième embrayage E2 est utilisé pour le second rapport de marche avant et pour la marche arrière. L'élément d'entrée 27 transmet par cet embrayage une partie du couple de turbine à la couronne 15 du premier train planétaire, laquelle couronne 15 engrène avec le jeu de satellites 16 portés par le châssis porte-satellites 17.

Le premier frein F1 est susceptible d'immobiliser l'élément intermédiaire 28, et par conséquent le premier châssis porte-satellites 17 et la couronne 18 du deuxième train planétaire. Il est utilisé pour obtenir le premier rapport de marche avant et la marche arrière.

Le second frein F2 est susceptible d'immobiliser l'élément d'arrêt 29 solidaire du planétaire double 19 commun aux deux premiers trains planétaires. Il est utilisé pour obtenir les trois premiers rapports de marche avant.

Comme indiqué ci-dessus, l'organe de sortie du train planétaire double est le châssis porte-satellites 20 du second train lié en rotation à la couronne 22 du train rassembleur.

Pour obtenir le premier rapport les freins F1 et F2 sont actionnés simultanément ce qui entraîne l'immobilisation du train double d'entrée et de la couronne 22. Le couple moteur passe intégralement par le planétaire 25 et le rapport de vitesse obtenu ne dépend que de la raison R3 du train rassembleur et il a pour valeur relative $1/1 + R3$ de la vitesse turbine.

Pour obtenir les autres rapports de vitesses en marche avant et la marche arrière, le train rassembleur ajoute le couple transmis par le planétaire 25 au couple transmis à travers le mécanisme à train planétaire double par la couronne 22.

La vitesse obtenue à l'arbre de sortie 10, c'est-à-dire la vitesse du châssis porte-satellites 24, est liée aux vitesses relatives du planétaire 25 et de la couronne 22 par la relation :
Vitesse de sortie = $1/1 + R3$ vitesse planétaire + $R3/1 + R3$ vitesse couronne.

La vitesse de la couronne 22 dépend des caractéristiques des premier et second trains planétaires, des éléments liés en rotation et des deux organes de commande actionnés.

Pour le rapport de quatrième les embrayages E1 et E2 sont actionnés simultanément ; il en résulte que la vitesse de la couronne 22 est égale à la vitesse de l'arbre d'entrée 5, qui est aussi celle du planétaire 25, et finalement l'arbre 10 tourne aussi à cette même vitesse (prise directe).

Selon le mode de réalisation du mécanisme de la figure 1, donné à titre d'exemple non limitatif, les vitesses relatives de sortie du mécanisme ont pour valeur :

Pour le second rapport : $M2 = R2/(R2 + 1) \times R1/(1 + R1)$
Pour le troisième rapport : $M3 = R2/R2 + 1$
Pour la marche arrière : $MAR = - R1/R2 + 1$

Dans ces relations R1 et R2 désignent les raisons respectives des premier et second trains planétaires du mécanisme, c'est-à-dire pour chacun d'eux le rapport entre les nombres de dents de la couronne et du planétaire...

Le choix des caractéristiques des divers éléments des trains est fait de telle sorte que l'échelonnement des différents rapports en marche avant soit correct.

Pour obtenir un rapport de marche arrière acceptable il est nécessaire que dans la relation :
Vitesse de sortie = $1/1 + R3$ vitesse planétaire + $R3/1 + R3 \times MAR$ le second terme négatif, qui devient

R3/(1 + R3) × (− R1)/R2 + 1 ait une valeur absolue très supérieure au terme 1/1 + R3.

Pour illustrer les avantages d'un changement de vitesses à trains épicycloïdaux donnant quatre rapports en marche avant et un rapport en marche arrière avec seulement quatre organes de commande, un exemple de réalisation correspondant à la figure 1 est donné ci-dessous :

Soit un ensemble de trois trains épicycloïdaux dont les raisons sont respectivement R1 = 1,72 ; R2 = 2 et R3 = 2,58.

On calcule tout d'abord les vitesses de sortie M du mécanisme pour les deuxième et troisième rapport et la marche arrière, ce qui donne tous calculs faits M2 = 0,422 ; M3 = 0,667 ; MAR = − 0,572.

La relation correspondant au train rassembleur de raison R3 = 2,58 pour valeur :

vitesse sortie = 0,279 vitesse planétaire + 0,721 vitesse mécanisme.

Les rapports de vitesses obtenus, en négligeant le glissement du convertisseur de couple, ont pour valeurs relatives :

| | | |
|---|---|---|
| première vitesse =1/1 + R3 | = | 0,279 |
| seconde vitesse = 0,279 + 0,721 × 0,422 | = | 0,583 |
| troisième vitesse = 0,279 + 0,721 × 0,667 | = | 0,760 |
| quatrième vitesse | = | 1,000 |
| marche arrière = 0,279 + 0,721 × (− 0,572) | = | − 0,134. |

La gamme des vitesses obtenues a pour valeur 1 + R3, soit pour cet exemple 3,58, et ne dépend que du train rassembleur.

L'exemple donné ci-dessus n'est pas limitatif et d'autres caractéristiques peuvent être choisies sans sortir du cadre de l'invention.

Le tableau 1 ci-dessous résume le fonctionnement du dispositif décrit et donné à titre d'exemple. Sur ce tableau la colonne de gauche indique les rapports de vitesses avec, en correspondance sur chaque ligne horizontale, une croix indiquant les éléments activés pour obtenir ce rapport ; la colonne de droite indique la valeur des vitesses obtenues.

Tableau 1

| | E1 | E2 | F1 | F2 | Rapport |
|---|---|---|---|---|---|
| 1 | | | X | X | 0,279 |
| 2 | | X | | X | 0,583 |
| 3 | X | − | | X | 0,760 |
| 4 | X | X | | | 1,000 |
| AR | | X | X | | 0,134 |

## Revendications

1. Changement de vitesses à trains épicycloïdaux associé à un convertisseur de couple dans lequel un mécanisme formé de trains épicycloïdaux et d'organes de liaison commandés (E1, E2, F1, F2), du type frein ou embrayage, introduit selon diverses combinaisons des actionnements de ces organes un rapport de vitesse variable entre un arbre d'entrée (5) provenant du convertisseur (1) et un organe de sortie (20), caractérisé par le fait qu'il comporte en outre un train rassembleur à deux entrées (22, 25) et une sortie (24) dont une des entrées (22) est reliée audit organe de sortie (20) dudit mécanisme, dont l'autre entrée (25) est reliée directement et constamment audit arbre d'entrée (5) et dont la sortie (24) est reliée à l'arbre de sortie (10) de l'ensemble ; et que la commande du mécanisme comporte une combinaison supplémentaire, normalement non utilisable, provoquant le blocage en rotation de l'organe de sortie (20), blocage auquel correspond un rapport de vitesse supplémentaire pour l'arbre de sortie sans organe de liaison commandé supplémentaire.

2. Changement de vitesses selon la revendication 1, caractérisé par le fait que ledit mécanisme est du type comportant deux trains simples, deux freins (F1, F2) et deux embrayages (E1, E2) et fournissant sur l'organe de sortie trois rapports de marche avant et une marche arrière, que le train rassembleur additionne les couples et les vitesses dans le même sens pour lesdits trois rapports de marche avant, que la raison du train rassembleur et le rapport de marche arrière du mécanisme sont tels que la vitesse inverse de l'organe de sortie (20) soit prépondérante sur la vitesse directe de l'autre entrée (25) du train rassembleur afin d'obtenir une marche arrière réelle et d'un rapport convenable sur l'arbre de sortie (10).

3. Changement de vitesses selon la revendication 2, caractérisé en outre par le fait que la raison du train rassembleur est telle que le rapport de vitesse supplémentaire correspondant au blocage de l'organe de sortie (20) s'insère dans un échelonnement correct en tant que rapport de première dans les quatre rapports de marche avant obtenus par l'ensemble.

4

## Claims

1. Gear change with epicyclic trains combined with a torque converter in which a mechanism consisting of epicyclic trains and controlled connecting members (E1, E2, F1, F2) of the brake or clutch type introduces, by various combinations of the operations of these members, a variable speed ratio between an input shaft (5) from the converter (1) and an output member (20), characterized in that it also comprises a gathering train with two inputs (22, 25) and one output (24), one of the inputs (22) of which is connected to the said output member (20) of the said mechanism, the other input (25) of which is directly and constantly connected to the said input shaft (5) and the output (24) of which is connected to the output shaft (10) from the whole unit ; and in that the mechanism control system comprises an additional combination, normally not utilizable, causing locking of the output member (20) in rotation, which locking corresponds to an additional speed ratio for the output shaft without an additional controlled connecting member.

2. The gear change according to claim 1, characterized in that the said mechanism is of the type comprising two simple trains, two brakes (F1, F2) and two clutches (E1, E2) an supplying three forward drive ratios and one reverse on the output member ; in that the gathering train adds the torques and the speeds in the same direction for the said three forward drive ratios ; and in that the gathering train gear ratio and the reverse drive ratio of the mechanism are such that the reverse speed of the output member (20) prevails over the direct speed of the other input (25) of the gathering train so as to obtain a true reverse drive and a suitable ratio on the output shaft (10).

3. The gear change according to claim 2, characterized in addition in that the gear ratio of the gathering train is such that the additional speed ratio corresponding to locking of the output member (20) fits into a correct spread of ratios as first ratio in the four forward drive ratios obtained by the whole unit.

## Ansprüche

1. Gangschaltung mit Planetenradsätzen in Verbindung mit einem Drehmomentwandler, in dem ein Mechanismus, gebildet aus Planetenradsätzen und betätigten Verbindungsorganen (E1, E2, F1, F2) vom Typ Bremse oder Kupplung, gemäß unterschiedlichen Betätigungskombinationen dieser Organe ein variables Drehzahlverhältnis zwischen einer Eingangswelle (5), die vom Drehmomentwandler (1) herkommt, und einem Ausgangsorgan (2) einführt, dadurch gekennzeichnet, daß sie ferner ein Erfassungsglied mit zwei Eingängen (22, 25) und einem Ausgang (24) enthält, von denen ein Eingang (22) mit dem genannten Ausgangsorgan (20) des genannten Mechanismus verbunden ist, dessen anderer Ausgang (25) unmittelbar und ständig mit der genannten Eingangswelle (5) verbunden ist, und dessen Ausgang (24) mit der Ausgangswelle (10) der Baugruppe verbunden ist ; und daß die Steuerung des Mechanismus eine zusätzliche normalerweise nicht verwendbare Kombination enthält, die die drehfeste Arretierung des Ausgangsorgans (20) verursacht, wobei dieser Arretierung ein zusätzliches Drehzahlverhältnis für die Ausgangswelle ohne zusätzliches gesteuertes Verbindungsorgan entspricht.

2. Gangschaltung gemäß Anspruch 1, dadurch gekennzeichnet, daß der genannte Mechanismus von einem Typ ist, der zwei einfache Züge, zwei Bremsen (F1, F2) und zwei Kupplungen (E1, E2) enthält und drei Vorwärtsgänge und einen Rückwärtsgang auf das Ausgangsorgan liefert, daß das Erfassungsglied die Drehmomente und die Drehzahlen für die genannten drei Vorwärtsgänge gleichsinnig addiert, daß das Verhältnis des Erfassungsglieds und die Proportion des Rückwärtsgangs des Mechanismus so sind, daß der Reziprokwert des Ausgangsorgans (20) die direkte Drehzahl des anderen Eingangs (25) des Erfassungsglieds überwiegt, um einen wahren Rückwärtsgang mit einem passenden Drehzahlverhältnis auf die Ausgangswelle (10) zu erhalten.

3. Gangschaltung gemäß Anspruch 2, dadurch gekennzeichnet, daß das Verhältnis des Erfassungsglieds so ist, daß sich das zusätzliche, der Arretierung des Ausgangsorgans (20) entsprechende Drehzahlverhältnis in richtig gestaffelter Weise als erster Gang in die vier von der Gesamtbaugruppe erzeugten Vorwärtsgänge einfügt.

FIG.1